# EUROPEAN PATENT APPLICATION

(11) **EP 4 631 898 A1**
(43) Date of publication of application: **15.10.2025**
(21) Application number: 25164582.6
(22) Date of filing: 18.03.2025
(51) Int. Cl.: B65H 19/10, B65H 23/00, B65H 26/02, B65H 26/06, B65H 26/08, H01M 10/04

(54) **APPARATUS AND METHOD FOR SUPPLYING ROLL-TYPE MATERIAL**

(30) Priority: 01.04.2024 KR 20240044153
(71) Applicant: SK On Co., Ltd., Seoul 03161 (KR)
(72) Inventor: CHOI, Hyeong Uk, 34124 Daejeon (KR); KWON, O Chang, 34124 Daejeon (KR); SHIN, Kyeung Su, 34124 Daejeon (KR); KIM, Hye Su, 34124 Daejeon (KR)
(74) Representative: Stolmár & Partner Patentanwälte PartG mbB

(57) **Abstract**

Proposed is an apparatus for supplying a roll-type material, the apparatus including an unwinder for unwinding a roll on which a material is wound, a rotation speed sensor for measuring a rotation speed of the roll, and a controller for performing a first deceleration for decelerating the rotation speed of the roll when the rotation speed of the roll is equal to or greater than a first reference rotation speed, and performing a second deceleration for decelerating the rotation speed of the roll when the rotation speed of the roll is equal to or greater than a second reference rotation speed after the rotation speed of the roll is decelerated. Accordingly, it is possible to adjust a supply speed of the material according to a remaining amount of the material without operator's control, and minimize waste of the material.

## Description

### CROSS REFERENCE TO RELATED APPLICATION

The present application claims priority to Korean Patent Application No. 10-2024-0044153, filed April 1, 2024, the entire contents of which is incorporated herein for all purposes by this reference.

### TECHNICAL FIELD

The present disclosure relates to an apparatus and method for supplying a roll-type material.

### BACKGROUND

Secondary batteries are batteries which can be repeatedly charged and discharged. Application fields of the secondary batteries includes small electronic devices such as smartphones and laptop computers, electric vehicles (EVs), and energy storage systems (ESSs).

In the process of manufacturing a secondary battery, an electrode or separator is used in a form wound on a roll. For example, an electrode material may be supplied to equipment in a state of being wound on a roll, the electrode material may be unwound from the roll, the electrode material may be rolled through a rolling process, and the rolled electrode material may be rewound on another roll. When the material on the roll is entirely unwound, the roll needs to be replaced with a new roll.

The foregoing is intended merely to aid in the understanding of the background of the present disclosure, and is not intended to mean that the present disclosure falls within the purview of the related art that is already known to those skilled in the art.

### SUMMARY

Accordingly, the present disclosure has been made keeping in mind the above problems occurring in the related art, and one objective of the present disclosure is to provide an apparatus and method for supplying a roll-type material, the apparatus and method being capable of adjusting a supply speed depending on the degree to which the roll-type material is consumed.

The present disclosure is to provide an apparatus for supplying a roll-type material, the apparatus being capable of use in manufacture of secondary batteries, which are widely applied in green technology fields such as electric vehicles, battery charging stations, and solar and wind power generation using batteries.

The present disclosure is to provide an apparatus for supplying a roll-type material, the apparatus being capable of use in manufacture of secondary batteries, which are used in eco-friendly electric vehicles, hybrid vehicles, and the like to prevent climate change by suppressing air pollution and greenhouse gas emissions.

According to an aspect of the present disclosure, there is provided an apparatus for supplying a roll-type material, the apparatus including: an unwinder configured to unwind a roll on which a material is wound; a rotation speed sensor configured to measure a rotation speed of the roll; and a controller configured to perform a first deceleration for decelerating the rotation speed of the roll when the rotation speed of the roll is equal to or greater than a first reference rotation speed, and perform a second deceleration for decelerating the rotation speed of the roll when the rotation speed of the roll is equal to or greater than a second reference rotation speed after the rotation speed of the roll is decelerated.

According to an embodiment, the apparatus may further include: a first distance sensor configured to measure a distance to a bobbin of the roll; and a second distance sensor configured to measure a distance to the material wound on the roll.

According to an embodiment, the controller may calculate a thickness of the roll by subtracting a measurement value of the second distance sensor from a measurement value of the first distance sensor, perform the first deceleration when the thickness of the roll is equal to or less than a first reference thickness, and perform the second deceleration when the thickness of the roll is equal to or less than a second reference thickness after the first deceleration.

According to an embodiment, the controller may perform the first deceleration when the rotation speed of the roll is equal to or greater than the first reference rotation speed or the thickness of the roll is equal to or less than the first reference thickness, and perform the second deceleration when the rotation speed of the roll is equal to or greater than the second reference rotation speed or the thickness of the roll is equal to or less than the second reference thickness after the first deceleration.

According to an embodiment, the apparatus may further include: a color sensor configured to measure a color of the material wound on the roll.

According to an embodiment, the controller may receive a color value of the material from the color sensor, determine that an end of the material is detected when the color value is changed, and stop unwinding of the roll.

According to an embodiment, the apparatus may further include: a guide roller configured to guide the material to be transferred; a torque sensor connected to the guide roller and configured to measure a torque that is applied to the guide roller while the material is moved in contact with the guide roller; and a nip roller disposed spaced apart from the guide roller and configured to fixedly pressurize the material to the guide roller under control of the controller.

According to an embodiment, the controller may receive a torque at which the guide roller is rotated from the torque sensor, determine that the material is broken when the torque is equal to or less than a reference torque, and control the nip roller to be moved toward the guide roller.

According to an embodiment, the controller may control the nip roller to be moved away from the guide roller when receiving a reset input.

According to an embodiment, the controller may convert the rotation speed of the roll into a remaining length of the material wound on the roll, perform the first deceleration when the remaining length is equal to or less than a first reference length, and perform the second deceleration when the remaining length is equal to or less than a second reference length after the first deceleration.

According to an embodiment, a speed immediately after performing the first deceleration may be lower than the second reference rotation speed, and a speed immediately after performing the second deceleration may be lower than the speed immediately after performing the first deceleration.

According to another aspect of the present disclosure, there is provided a method of supplying a roll-type material, the method including: a rotation speed measurement step in which a rotation speed sensor measures in real time a rotation speed of a roll that is rotated while the roll on which a material is wound is unwound; a first determination step in which a controller determines whether the rotation speed of the roll is equal to or greater than a first reference rotation speed; a first deceleration step in which the controller controls the rotation speed of the roll to be decelerated when the rotation speed of the roll is equal to or greater than the first reference rotation speed; a second determination step in which the controller determines whether the rotation speed of the roll is equal to or greater than a second reference rotation speed after the first deceleration step; and a second deceleration step in which the controller controls the rotation speed of the roll to be decelerated when the rotation speed of the roll is equal to or greater than the second reference rotation speed.

According to an embodiment, the method may further include: a thickness measurement step in which a first distance sensor measures in real time a distance to a bobbin of the roll, a second distance sensor measures a distance to the material wound on the roll, and the controller calculates a thickness of the roll by subtracting a measurement value of the second distance sensor from a measurement value of the first distance sensor; a third determination step in which the controller determines whether the thickness of the roll is equal to or less than a first reference thickness; and a fourth determination step in which the controller determines whether the thickness of the roll is equal to or less than a second reference thickness after the first deceleration step.

According to an embodiment, the first determination step and the third determination step may be performed independently in parallel, and the second determination step and the fourth determination step may be performed independently in parallel.

According to an embodiment, the first deceleration step may be performed when the rotation speed of the roll is determined to be equal to or greater than the first reference rotation speed in the first determination step or when the thickness of the roll is determined to be equal to or less than the first reference thickness in the third determination step, and the second deceleration step may be performed when the rotation speed of the roll is determined to be equal to or greater than the second reference rotation speed in the second determination step or when the thickness of the roll is determined to be equal to or less than the second reference thickness in the fourth determination step.

According to an embodiment, the method may further include: a color measurement step in which a color sensor measures in real time a color of the material wound on the roll; an end detection step in which the controller receives a color value of the material from the color sensor and determines that an end of the material is detected when the color value is changed; and a stop step in which the controller stops unwinding of the roll when detecting the end of the material.

According to an embodiment, the method may further include: a torque measurement step in which a torque sensor connected to a guide roller measures a torque that is applied to the guide roller while the material is moved in contact with the guide roller; a breakage determination step in which the controller receives the torque of the guide roller from the torque sensor and determines whether the torque of the guide roller is equal to or less than a reference torque; and a nip roller operation step in which the material is determined to be broken when the torque of the guide roller is equal to or less than the reference torque and the nip roller is controlled in movement so that the nip roller fixedly pressurizes the material to the guide roller.

According to an embodiment, the method may further include: a reset input reception step in which the controller receives a reset input; and a nip roller release step in which the controller controls the nip roller to be moved away from the guide roller when receiving the reset input.

The features and advantages of the present disclosure will be more clearly understood from the following detailed description when taken in conjunction with the accompanying drawings.

All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

According to the present disclosure, it is possible to minimize waste of materials.

According to the present disclosure, it is possible to adjust a supply speed of a material according to a remaining amount of the material without operator's control.

According to the present disclosure, it is possible to minimize damage to the material when the material is broken during the process of supplying the material.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a view illustrating an apparatus for supplying a roll-type material according to an embodiment;
FIG. 2 is a block diagram illustrating an apparatus for supplying a roll-type material according to an embodiment;
FIG. 3 is a graph illustrating a controlled rotation speed of a roll according to an embodiment;
FIG. 4 is a view illustrating a change in RPM of the roll according to an embodiment;
FIG. 5 is a view illustrating a change in thickness of the roll according to an embodiment;
FIG. 6 is a view illustrating a change in color of the roll according to an embodiment;
FIG. 7 is a view illustrating the operation of a nip roller according to an embodiment;
FIG. 8 is a flowchart illustrating a method of supplying a roll-type material according to an embodiment; and
FIG. 9 is a flowchart illustrating the operation of a nip roller according to an embodiment.

### DETAILED DESCRIPTION

Reference will now be made in greater detail to exemplary embodiments of the present disclosure with reference to the accompanying drawings. However, the embodiments are provided as exemplary examples, and the spirit of the present disclosure are not limited to those specific embodiments.

As for reference numerals associated with elements in the drawings, the same reference numerals are used throughout the different drawings to designate the same or similar elements.

The terminology used herein is for the purpose of describing particular embodiments only and is not intended to be limiting. As used herein, the singular forms are intended to include the plural forms as well, unless the context clearly indicates otherwise.

The drawings may be schematic or exaggerated to illustrate embodiments. In this document, expressions "have", "may have", "includes", or "may include" specify the presence of stated features (e.g., a numerical value, function, operation, or element such as a part), but do not preclude the presence of additional features.

Terms such as "one", "other", "another", "first", and "second", etc. are used only to distinguish one element from another element, these elements should not be limited by these terms.

The embodiments described herein and the accompanying drawings are not intended to limit the present disclosure to any particular embodiment. It should be understood that the present disclosure covers various modifications, equivalents, and/or alternatives of the embodiments.

Hereinbelow, exemplary embodiments of the present disclosure will be described in detail with reference to the accompanying drawings.

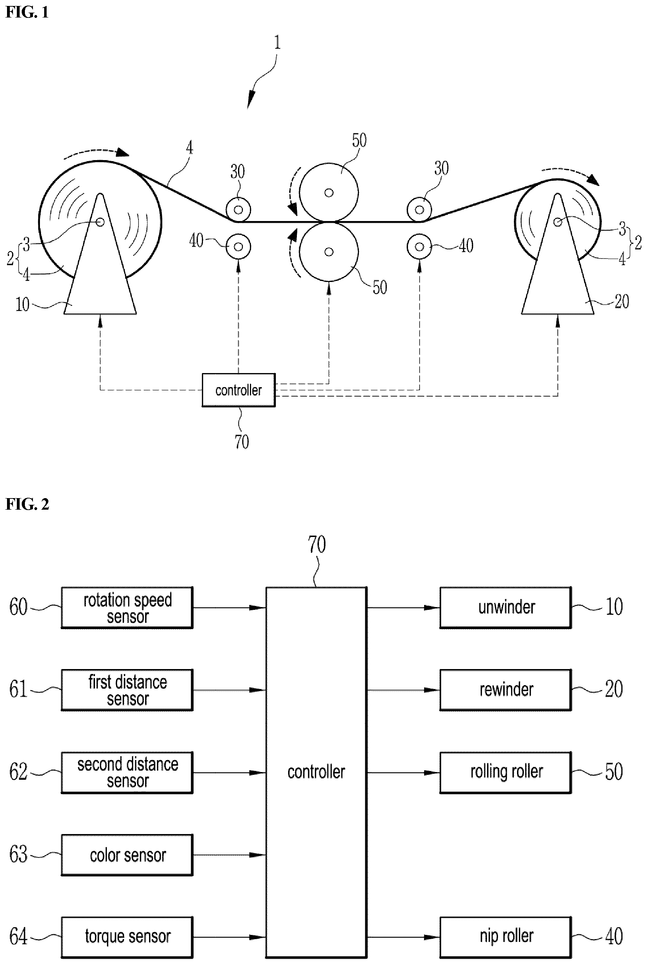

FIG. 1 is a view illustrating an apparatus 1 for supplying a roll-type material according to an embodiment.

To explain the apparatus 1 for supplying the roll-type material according to the embodiment, a process of rolling a material 4 is illustrated in FIG. 1. The roll-type material refers to a state in which the material 4 is wound on a bobbin 3. When a roll 2 is rotated by an unwinder 10, the material 4 may be unwound from a bobbin 3 and passes through a guide roller 30 and a rolling roller 50, and the material 4 rolled by the rolling roller 50 may be wound on a bobbin 3 of a rewinder 20. The apparatus 1 for supplying the roll-type material according to the embodiment is a device that unwinds the material 4 wound on the roll 2 and supplies it to a manufacturing facility. The apparatus for supplying the roll-type material may be applied to other processes in addition to a rolling process.

The roll 2 includes the bobbin 3 and the material 4 wound on the bobbin. The material 4 may include a current collector 5, an electrode with an active material 6 applied to the current collector 5, a separator, and the like. The current collector 5, the electrode, and the separator may be used to manufacture a battery cell.

The unwinder 10 is equipment that unwinds the material 4 wound on the bobbin 3 by rotating the roll 2. The unwinder 10 may rotate the roll 2 at a predetermined speed on the basis of the control of a controller 70.

The rewinder 20 is equipment that winds the material 4 onto the bobbin 3 by rotating the roll 2. The rewinder 20 may rotate the roll 2 at a predetermined speed on the basis of the control of the controller 70.

The guide roller 30 is a roller that guides the material 4 in a desired direction and transfers the material 4. The guide roller 30 may be rotated by the movement of the material 4.

The rolling roller 50 may pressurize the material 4 to reduce a thickness of the material 4. The rolling roller 50 may be rotated according to a transfer direction of the material 4. The rolling roller 50 may be rotated at a predetermined speed on the basis of the control of the controller 70.

The nip roller 40 is located at a position spaced apart from the guide roller 30 and is not allowed to come into contact with the material 4 during normal process conditions. When the material 4 is broken, the nip roller 40 may be moved toward the guide roller 30 and fixedly pressurize the material 4 to the guide roller 30.

The controller 70 may control the operation of the unwinder 10, the rewinder 20, the guide roller 30, the rolling roller 50, and the nip roller 40. The controller 70 may include a device that receives data from a sensor, performs information processing, and controls equipment. The controller 70 may include one or more processors, a storage unit, a communication interface, an input/output device, and the like. The controller 70 may be implemented as a computer device, a PLC, a process control system, an equipment control system, or the like.

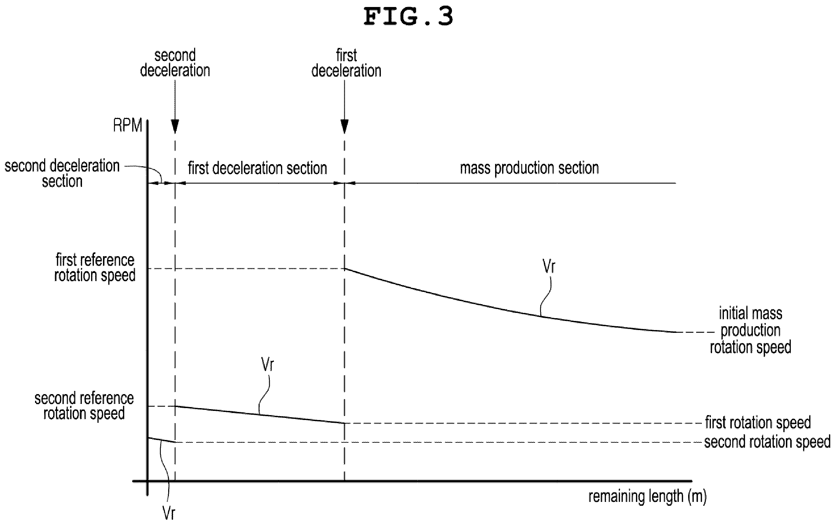

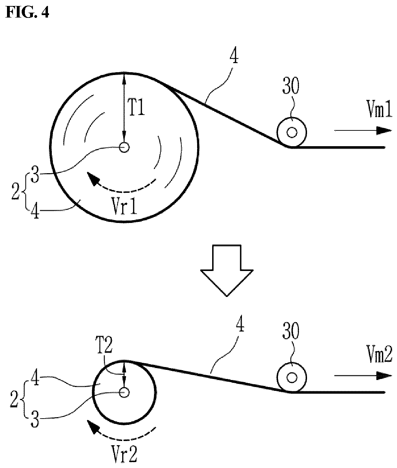

FIG. 2 is a block diagram illustrating an apparatus 1 for supplying a roll-type material according to an embodiment. FIG. 3 is a graph illustrating a controlled rotation speed of a roll 2 according to an embodiment. FIG. 4 is a view illustrating a change in RPM of the roll 2 according to an embodiment. FIG. 1, FIG. 2, FIG. 3, and FIG. 4 will be referenced together.

In a case where a material 4 wound on the roll 2 is entirely unwound, when the rotation of the roll 2 is suddenly stopped, equipment such as an unwinder 10, a rolling roller 50, and a rewinder 20 may be damaged. For this reason, a controller 70 according to the embodiment may control a rotation speed of the roll 2 to become slow when a remaining length of the material is short.

The apparatus 1 for supplying the roll-type material according to the embodiment may include: the unwinder 10 for unwinding the roll 2 on which the material 4 is wound; a rotation speed sensor 60 for measuring the rotation speed of the roll 2; and the controller 70 for performing a first deceleration for decelerating the rotation speed of the roll 2 when the rotation speed of the roll 2 is equal to or greater than a first reference rotation speed, and performing a second deceleration for decelerating the rotation speed of the roll 2 when the rotation speed of the roll 2 is equal to or greater than a second reference rotation speed after the rotation speed of the roll 2 is decelerated.

The rotation speed sensor 60 may be connected to the unwinder 10. The rotation speed sensor 60 may measure a speed at which the roll 2 is rotated while the material 4 is unwound from the unwinder 10. The rotation speed sensor 60 may measure the rotation speed of the roll 2 in units of revolutions per minute (RPM) and provide it to the controller 70. The controller 70 may convert data received from the rotation speed sensor 60 into RPM units and use it. The rotation speed sensor 60 may measure the rotation speed of the roll 2 in real time and provide it to the controller 70.

The controller 70 may perform the first deceleration to decelerate the rotation speed of the roll 2 to a first speed when the rotation speed of the roll 2 is equal to or greater than the first reference rotation speed. The controller 70 may control the rotation speed of the roll 2 to become slower when the material 4 is continuously unwound and the remaining length thereof becomes shorter after the rotation speed of the roll 2 is decelerated to the first speed. The controller 70 may perform the second deceleration to decelerate the rotation speed of the roll 2 to a second speed when the rotation speed of the roll 2 is equal to or greater than the second reference rotation speed.

The controller 70 may convert the rotation speed of the roll 2 into the remaining length of the material 4 wound on the roll 2, perform the first deceleration when the remaining length is equal to or less than a first reference length, and perform the second deceleration when the remaining length is equal to or less than a second reference length after the first deceleration.

The controller 70 may convert the rotation speed of the roll 2 into the remaining length. The controller 70 may calculate the remaining length of the material 4 on the basis of a circumferential length of a bobbin 3, a thickness of an electrode, and the rotation speed of the roll 2. The remaining length is a length of the material 4 that currently remains wound on the roll 2 of the unwinder 10. When the remaining length is short, the rotation speed of the roll 2 needs to be increased so that the material 4 is supplied to the rolling roller 50 at a predetermined speed. That is, when the rotation speed of the roll 2 is equal to or greater than a predetermined value, this may be interpreted that the remaining length is equal to or less than a predetermined value.

The controller 70 may convert the remaining length of the material 4 from the rotation speed of the roll 2, compare it with the first reference length, and perform the first deceleration when the remaining length is equal to or less than the first reference length. After performing the first deceleration, the controller 70 may compare the remaining length with the second reference length, and perform the second deceleration when the remaining length is equal to or less than the second reference length.

A determination based on the remaining length may be performed instead of a determination based on the rotation speed described above. Since the controller 70 converts the remaining length on the basis of the rotation speed, the deceleration may be performed at substantially the same point in time.

The relationship between a rotation speed Vr of the roll 2 and a moving speed Vm of the material 4 will be described with reference to FIGS. 3 and 4. In order for the material 4 to be supplied to a process at a constant moving speed Vm, the rotation speed Vr of the roll 2 of the unwinder 10 needs to be gradually increased. This is because a thickness of the roll 2 is reduced when the material 4 is unwound from the roll 2, and as the thickness of the roll 2 is reduced, the rotation speed Vr of the roll 2 needs to be increased to maintain the moving speed Vm of the material 4. For example, a case where the roll 2 with a first thickness T1 is unwound to have a second thickness T2 will be described. Even when the thickness of the roll 2 changes from the first thickness T1 to the second thickness T2, the moving speed of the material 4 needs to be the same (Vm1=Vm2). At this time, a rotation speed Vr2 of the roll 2 having the second thickness T2 is greater than a rotation speed Vr1 of the roll 2 having the first thickness T1. The rotation speed Vr of the roll 2 is gradually increased as the thickness thereof changes from the first thickness T1 to the second thickness T2.

A mass production section is a section where the material 4 is moved at a mass production speed. The mass production speed is a value determined by the moving speed of the material 4. The mass production speed may be a speed in units of m/s or m/h. When the roll 2 is unwound, the thickness of the roll 2 is reduced, and in order to maintain the mass production speed at a predetermined speed, the rotation speed of the roll 2 unwound from the unwinder 10 is gradually increased. As a result, the rotation speed of the roll 2 reaches the first reference rotation speed. The mass production section may refer to a period from when a new roll-type material starts to be unwound until at a predetermined remaining length remains.

A first deceleration section is a section where the material 4 is moved at a first deceleration speed. The first deceleration speed is a value determined by the moving speed of the material 4. The first deceleration speed is less than the mass production speed. To maintain the first deceleration speed in the first deceleration section, the rotation speed of the roll 2 unwound from the unwinder 10 is gradually increased. As a result, the rotation speed of the roll 2 reaches the second reference rotation speed. The first deceleration section may refer to a period from when the first deceleration is performed until only a very small amount of remaining length remains.

A second deceleration section is a section where the material 4 is moved at a second deceleration speed. The second deceleration speed is a value determined by the moving speed of the material 4. The second deceleration speed is less than the first deceleration speed. To maintain the second deceleration speed in the second deceleration section, the rotation speed of the roll 2 unwound from the unwinder 10 is gradually increased. The second deceleration section may refer to a period from when only the very small amount of remaining length remains until an end of the material is detected.

The rotation of the roll 2 and the supply of the material 4 will be described in the order of the mass production section, the first deceleration section, and the second deceleration section.

In the mass production section, the roll 2 starts to be rotated at an initial production rotation speed. The initial production rotation speed is the rotation speed of the roll 2. The initial production rotation speed may be determined so that the material 4 is supplied at the mass production speed according to an initial thickness of the roll 2. To maintain the material 4 moving at the mass production speed, the rotation speed of the roll 2 is increased as the remaining length is reduced. When the rotation speed of the roll 2 reaches the first reference rotation speed, the first deceleration is performed. When the first deceleration is performed, the mass production section switches to the first deceleration section. In the first deceleration section, the roll 2 starts to be rotated at a first rotation speed. To maintain the material 4 moving at the first deceleration speed, the rotation speed of the roll 2 is increased as the remaining length is reduced. When the rotation speed of the roll 2 reaches the second reference rotation speed, the second deceleration is performed. When the second deceleration is performed, the first deceleration section switches to the second deceleration section. In the second deceleration section, the roll 2 starts to be rotated at a second rotation speed. The roll 2 is rotated to maintain the material 4 moving at the second deceleration speed, and when the controller 70 detects the end of the material 4, the rotation of the roll 2 is stopped. Here, three or more deceleration sections may exist.

The first deceleration performed by the controller 70 is to reduce the rotation speed of the roll 2 to the first rotation speed. The second deceleration performed by the controller 70 is to reduce the rotation speed of the roll 2 to the second rotation speed. The first rotation speed and the second rotation speed are predetermined values. Here, a speed immediately after performing the first deceleration is lower than the second reference rotation speed, and a speed immediately after performing the second deceleration is lower than the speed immediately after performing the first deceleration. That is, the first rotation speed is lower than the second reference rotation speed, and the second rotation speed is lower than the first rotation speed. Also, the second reference rotation speed is lower than the initial production rotation speed.

The rotation speeds are set from low to high in the following order: the second rotation speed, the first rotation speed, the second reference rotation speed, the initial production rotation speed, and the first reference rotation speed. The second rotation speed is the lowest, and the first reference rotation speed is the highest.

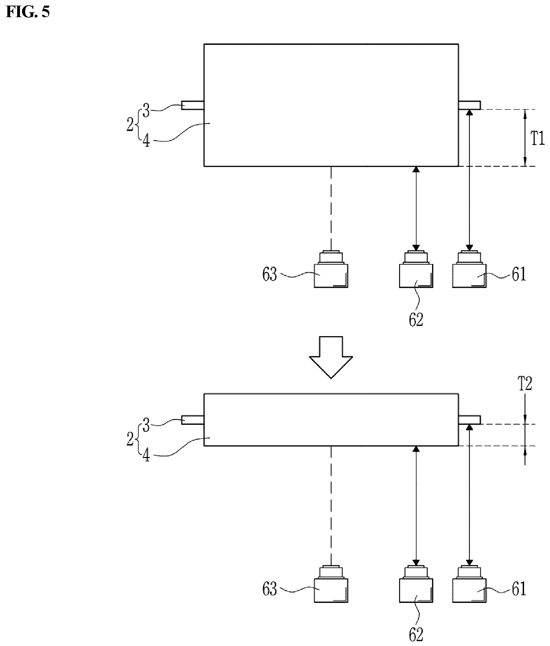

FIG. 5 is a view illustrating a change in thickness of the roll 2 according to an embodiment.

The apparatus 1 for supplying the roll-type material according to the embodiment may further include: a first distance sensor 61 for measuring a distance to the bobbin 3 of the roll 2; and a second distance sensor 62 for measuring a distance to the material 4 wound on the roll 2. The controller 70 may calculate the thickness of the roll 2 by subtracting a measurement value of the second distance sensor 62 from a measurement value of the first distance sensor 61, perform the first deceleration when the thickness of the roll 2 is equal to or less than a first reference thickness, and perform the second deceleration when the thickness of the roll 2 is equal to or less than a second reference thickness after the first deceleration.

The first distance sensor 61 and the second distance sensor 62 may include various types of sensors, such as a laser type, an ultrasonic type, and an infrared type. The first distance sensor 61 and the second distance sensor 62 may be connected to the unwinder 10. The first distance sensor 61 and the second distance sensor 62 may be located to face the roll 2. The first distance sensor 61 may measure a distance from the first distance sensor 61 to the bobbin 3 of the roll 2 and provide it to the controller 70. The second distance sensor 62 may measure a distance from the second distance sensor 62 to the material 4 wound on the roll 2 and provide it to the controller 70. The controller 70 may calculate the thickness of the roll 2 by subtracting the measurement value of the second distance sensor 62 from the measurement value of the first distance sensor 61. The thickness of the roll 2 is the total thickness of the material 4 wound on the roll 2.

For example, a case where the roll 2 with a first thickness T1 is unwound to have a second thickness T2 will be described. When the thickness of the roll 2 is the first thickness T1, the first thickness T1 may be calculated by subtracting a measurement value D2 of the second measurement sensor from a measurement value D1 of the first distance sensor 61. When the thickness of the roll 2 is the second thickness T2, the second thickness T2 may be calculated by subtracting a measurement value D2 of the second measurement sensor from a measurement value D1 of the first distance sensor 61.

As the roll 2 is rotated, vibration may be produced, causing a slight change in the distance between the sensor and the roll 2. However, according to the embodiment, since the material 4 and the bobbin 3 vibrate equally due to vibration, and the measurement of the thickness of the roll 2 is achieved by measuring the distance to the bobbin 3 through the first distance sensor 61 and then measuring the distance to the material 4 through the second distance sensor 62 and subtracting it from the distance to the bobbin, the vibration of the roll 2 does not affect the measurement of the thickness of the roll 2.

When the length of the material 4 remaining on the roll 2 is long, the thickness of the roll 2 is large, and when the length of the material 4 remaining on the roll 2 is short, the thickness of the roll 2 is small. The controller 70 may determine the length of the material 4 remaining on the roll 2 on the basis of the thickness of the roll 2 and perform the first deceleration and the second deceleration.

The controller 70 may perform the first deceleration when the rotation speed of the roll 2 is equal to or greater than the first reference rotation speed or the thickness of the roll 2 is equal to or less than the first reference thickness, and perform the second deceleration when the rotation speed of the roll 2 is equal to or greater than the second reference rotation speed or the thickness of the roll 2 is equal to or less than the second reference thickness after the first deceleration.

The first deceleration performed by the controller 70 on the basis of the rotation speed of the roll 2 and the first deceleration performed by the controller on the basis of the thickness of the roll 2 are performed at the same first speed. That is, the controller 70 may perform the first deceleration when either a determination of comparing the rotation speed of the roll 2 with the first reference rotation speed or a determination of comparing the thickness of the roll 2 with the first reference thickness is satisfied.

The second deceleration performed by the controller 70 on the basis of the rotation speed of the roll 2 and the second deceleration performed by the controller on the basis of the thickness of the roll 2 are performed at the same second speed. That is, the controller 70 may perform the second deceleration when either the determination of comparing the rotation speed of the roll 2 with the second reference rotation speed or the determination of comparing the thickness of the roll 2 with the second reference thickness is satisfied.

The controller 70 may perform the determination based on the rotation speed of the roll 2 and the determination based on the thickness of the roll 2 in parallel and independently. The determination results may become the input of OR logic, and the controller 70 may perform the deceleration when either one of the two determination results is passed.

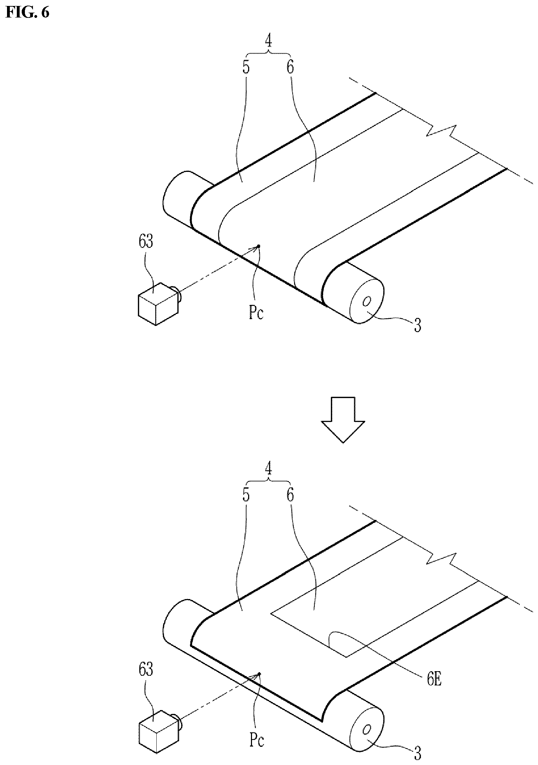

FIG. 6 is a view illustrating a change in color of the roll 2 according to an embodiment. FIG. 5 and FIG. 6 will be referenced together.

The apparatus 1 for supplying the roll-type material according to the embodiment may further include a color sensor 63 for measuring a color of the material 4 wound on the roll 2. The controller 70 may receive a color value of the material 4 from the color sensor 63, determine that the end of the material 4 is detected when the color value is changed, and stop unwinding of the roll 2.

The color sensor 63 may measure a color change of the material 4 and provide it to the controller 70. The color sensor 63 may include a fiber sensor, an image sensor, or other sensors capable of measuring a color change. The color sensor 63 may be located to face the material 4 wound on the roll 2.

When the material 4 is entirely unwound from the roll 2, the color sensor 63 may measure the color of the material 4 and then measure a color of the bobbin 3. Alternatively, when the material 4 is an electrode, the color sensor 63 may measure a color of a current collector 5 by measuring a color of an active material 6 while the active material 6 is applied to the current collector 5. The color of the material 4, the color of the bobbin 3, the color of the current collector 5 of the electrode, and the color of the active material 6 of the electrode measured by the color sensor 63 may be different from each other.

The controller 70 may determine that the color sensor 63 detects the end of the material 4 when a measurement value received from the color sensor 63 is changed. The controller 70 may determine that the color sensor 63 detects the end of the material 4 when the measurement value received from the color sensor 63 becomes a predetermined value.

When the controller 70 determines that the end of the material 4 is detected, the controller may control the unwinder 10, the rewinder 20, the rolling roller 50, and other equipment to stop rotation of the roll 2.

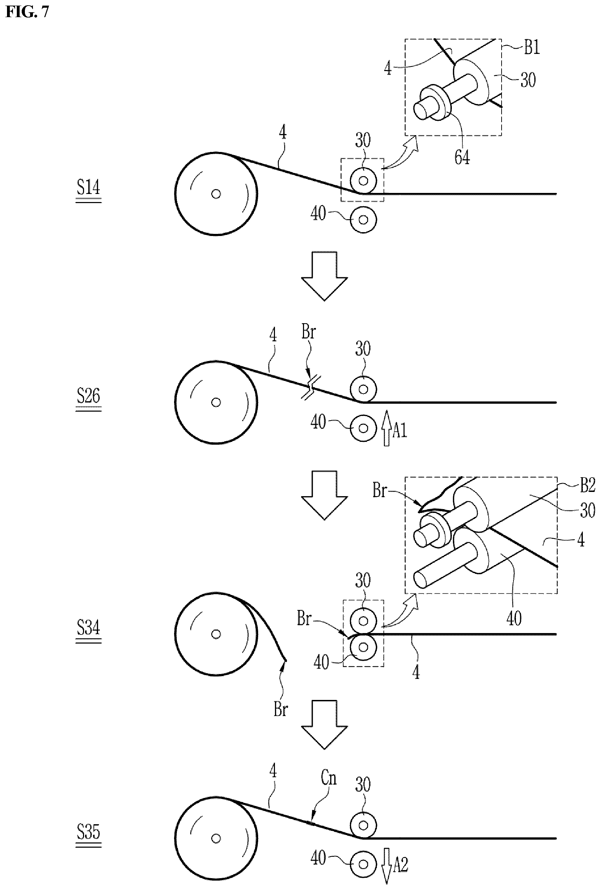

FIG. 7 is a view illustrating the operation of a nip roller 40 according to an embodiment. FIG. 1 will be referenced together.

The apparatus 1 for supplying the roll-type material may further include: a guide roller 30 for guiding the material 4 to be transferred; a torque sensor 64 connected to the guide roller 30 and measuring a torque that is applied to the guide roller 30 while the material 4 is moved in contact with the guide roller 30; and the nip roller 40 disposed spaced apart from the guide roller 30 and fixedly pressurizing the material 4 to the guide roller 30 under the control of the controller 70. The controller 70 may receive a torque at which the guide roller 30 is rotated from the torque sensor 64, determine that the material 4 is broken when the torque is equal to or less than a reference torque, and control the nip roller 40 to be moved toward the guide roller 30.

The guide roller 30 is a roller that transfers the material 4 and guides it to a desired position. A plurality of guide rollers 30 may be provided. The guide roller 30 may guide the material 4 output from the unwinder 10. The guide roller 30 may guide the material 4 input to the rewinder 20. The guide roller 30 may not be rotated itself, but be rotated by a moving force of the material 4 while in contact with the material 4.

An enlarged view B1 of FIG. 7 will be referenced. The torque sensor 64 may be connected to any one of the plurality of guide rollers 30. The torque sensor 64 may measure the torque at which the guide roller 30 is rotated and provide it to the controller 70. The torque sensor 64 may be connected to a guide roller 30 located at a position where the nip roller 40 is disposed.

The nip roller 40 and the guide roller 30 may be located spaced apart from each other, and the nip roller 40 may be moved toward the guide roller 30. The material 4 may be located between the guide roller 30 and the nip roller 40. When a process is operated normally, the nip roller 40 may not come into contact with the material 4. When the material 4 is broken Br, the nip roller 40 may be moved in a direction A1 of the guide roller 30 to pressurize and fix the material 4 to the guide roller 30. The movement of the nip roller 40 is controlled by the controller 70.

The controller 70 may compare the torque received from the torque sensor 64 with the reference torque. The controller 70 may determine that the material 4 is broken when the torque at which the guide roller 30 is rotated is equal to or less than the reference torque. When the controller 70 determines that the material 4 is broken, the controller may control the nip roller 40 to be moved in the direction of the guide roller 30. As a driving part that moves the nip roller 40 in the direction of the guide roller 30, any known technology may be used.

When the material 4 is broken, forces applied to the material 4 by the unwinder 10, the rewinder 20, the rolling roller 50, and the like may become unbalanced, causing various damages, such as the material 4 being folded, wrinkles being formed, or a layer coated on the material 4 being separated. When the material 4 is broken, the nip roller 40 and the guide roller 30 may pressurize and fix the material 4. Therefore, it is possible to prevent damage caused by breakage from being transmitted to an unbroken portion of the material 4.

An enlarged view B2 of FIG. 7 will be referenced. For example, when the material 4 is broken between the unwinder 10 and the guide roller 30, the nip roller 40 may pressurize and fix the material 4 in the direction of the guide roller 30, so damage may not be transmitted to the material 4 in a range from the guide roller 30 to the rolling roller 50.

When the material 4 is broken, a user may reconnect Cn the broken material 4 and then input a reset input to the controller 70 to resume the supply of the material 4. The controller 70 may receive the reset input from the user through an input device, such as an input button or a touch screen. The reset input is an input that causes the nip roller 40 to be returned to its original position while the nip roller 40 fixes the guide roller 30 and the material 4. When the controller 70 receives the reset input, the controller may control the nip roller 40 to be moved away from the guide roller 30. The nip roller 40 may be moved away from the guide roller 30 on the basis of the control of the controller 70. As a result, the material 4 fixed by the guide roller 30 and the nip roller 40 may be released.

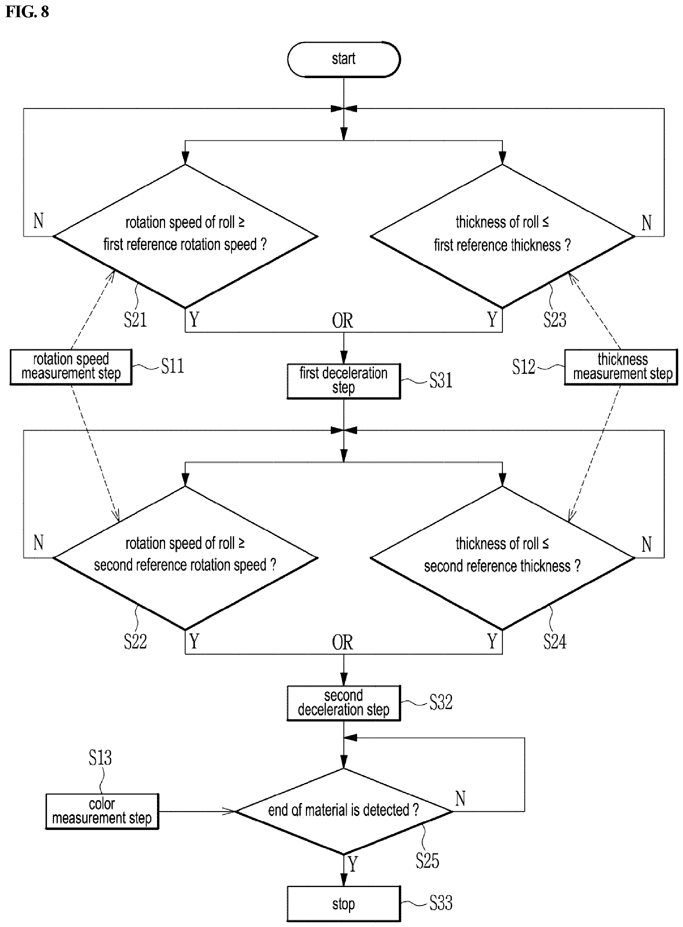

FIG. 8 is a flowchart illustrating a method of supplying a roll-type material according to an embodiment. FIG. 3 and FIG. 4 will be referenced together.

The method of supplying the roll-type material according to the embodiment may include: a rotation speed measurement step S11 in which a rotation speed sensor 60 measures in real time a rotation speed of a roll 2 that is rotated while the roll 2 on which a material 4 is wound is unwound; a first determination step S21 in which a controller 70 determines whether the rotation speed of the roll 2 is equal to or greater than a first reference rotation speed; a first deceleration step S31 in which the controller 70 controls the rotation speed of the roll 2 to be decelerated when the rotation speed of the roll 2 is equal to or greater than the first reference rotation speed; a second determination step S22 in which the controller 70 determines whether the rotation speed of the roll 2 is equal to or greater than a second reference rotation speed after the first deceleration step S31; and a second deceleration step S32 in which the controller 70 controls the rotation speed of the roll 2 to be decelerated when the rotation speed of the roll 2 is equal to or greater than the second reference rotation speed.

The rotation speed measurement step S11 is a step in which the rotation speed sensor 60 measures the rotation speed of the roll 2 in real time and provides it to the controller 70. The rotation speed measurement step S11 may be performed in real time, and may be continuously performed in a mass production section and a first deceleration section.

The first determination step S21 is a step in which the controller 70 compares the rotation speed of the roll 2 with the first reference rotation speed. The first determination step S21 may be performed in the mass production section. In the first determination step S21, the controller 70 may determine whether the rotation speed of the roll 2 is equal to or greater than the first reference rotation speed, and perform the first deceleration step S31 when the rotation speed of the roll 2 is equal to or greater than the first reference rotation speed (Y). The controller 70 may repeatedly perform the first determination step S21 when the rotation speed of the roll 2 is less than the first reference rotation speed (N).

The first deceleration step S31 is a step in which the controller 70 controls the rotation speed of the roll 2 to be decelerated. In the first deceleration step S31, the controller 70 may decelerate the rotation speed of the roll 2 to a first rotation speed. When the first deceleration step S31 is performed, the first deceleration section is entered. In the first deceleration section, the rotation speed of the roll 2 may be gradually increased from the first rotation speed so that the material 4 is moved at a first deceleration speed.

After the first deceleration step S31 is performed, the second determination step S22 is performed. The second determination step S22 is a step in which the controller 70 compares the rotation speed of the roll 2 with the second reference rotation speed. The second determination step S22 may be performed in the first deceleration section. In the second determination step S22, the controller 70 may determine whether the rotation speed of the roll 2 is equal to or greater than the second reference rotation speed, and perform the first deceleration step S31 when the rotation speed of the roll 2 is equal to or greater than the second reference rotation speed (Y). The controller 70 may repeatedly perform the second determination step S22 when the rotation speed of the roll 2 is less than the second reference rotation speed (N).

The second deceleration step S32 is a step in which the controller 70 controls the rotation speed of the roll 2 to be decelerated. In the second deceleration step S32, the controller 70 may decelerate the rotation speed of the roll 2 to a second rotation speed. When the second deceleration step S32 is performed, a second deceleration section is entered. In the second deceleration section, the rotation speed of the roll 2 may be gradually increased from the second rotation speed so that the material 4 is moved at a second deceleration speed.

FIG. 8 and FIG. 5 will be referenced together. The method of supplying the roll-type material according to the embodiment may further include: a thickness measurement step S12 in which a first distance sensor 61 measures in real time a distance to a bobbin 3 of the roll 2, a second distance sensor 62 measures a distance to the material 4 wound on the roll 2, and the controller 70 calculates a thickness of the roll 2 by subtracting a measurement value of the second distance sensor 62 from a measurement value of the first distance sensor 61; a third determination step S23 in which the controller 70 determines whether the thickness of the roll 2 is equal to or less than a first reference thickness; and a fourth determination step S24 in which the controller 70 determines whether the thickness of the roll 2 is equal to or less than a second reference thickness after the first deceleration step S31. Here, the first deceleration step S31 may be performed when the thickness of the roll 2 is equal to or less than the first reference thickness as a result of performing the third determination step S23, and the second deceleration step S32 may be performed when the thickness of the roll 2 is equal to or less than the second reference thickness as a result of performing the fourth determination step S24.

The thickness measurement step S12 is a step in which the first distance sensor 61 measures in real time the distance to the bobbin 3 and provides it to the controller 70, and the second distance sensor 62 measures in real time the distance to the material 4 and provides it to the controller 70. The thickness measurement step S12 may be performed in real time, and may be continuously performed in the mass production section and the first deceleration section. In the thickness measurement step S12, the controller 70 may calculate the thickness of the roll 2 by subtracting the measurement value of the second distance sensor 62 from the measurement value of the first distance sensor 61.

The third determination step S23 is a step in which the controller 70 compares the thickness of the roll 2 with the first reference thickness. The third determination step S23 may be performed in the mass production section. In the third determination step S23, the controller 70 may determine whether the thickness of the roll 2 is equal to or less than the first reference thickness, and perform the first deceleration step S31 when the thickness of the roll 2 is equal to or less than the first reference thickness (Y). The controller 70 may repeatedly perform the third determination step S23 when the thickness of the roll 2 is greater than the first reference thickness (N).

The fourth determination step S24 is a step in which the controller 70 compares the thickness of the roll 2 with the second reference thickness. The fourth determination step S24 may be performed in the first deceleration section. In the fourth determination step S24, the controller 70 may determine whether the thickness of the roll 2 is equal to or less than the second reference thickness, and perform the second deceleration step S32 when the thickness of the roll 2 is equal to or less than the second reference thickness (Y). The controller 70 may repeatedly perform the fourth determination step S24 when the thickness of the roll 2 is greater than the second reference thickness (N).

Here, the first determination step S21 and the third determination step S23 may be performed independently in parallel, and the second determination step S22 and the fourth determination step S24 may be performed independently in parallel. The first deceleration step S31 may be performed when the rotation speed of the roll 2 is determined to be equal to or greater than the first reference rotation speed in the first determination step S21 or when the thickness of the roll 2 is determined to be equal to or less than the first reference thickness in the third determination step S23 (Y). The second deceleration step S32 may be performed when the rotation speed of the roll 2 is determined to be equal to or greater than the second reference rotation speed in the second determination step S22 or when the thickness of the roll 2 is determined to be equal to or less than the second reference thickness in the fourth determination step S24 (Y). That is, the result of the first determination step S21 and the result of the third determination step S23 performed in the mass production section are connected through OR logic to determine whether to perform the first deceleration step S31. The result of the second determination step S22 and the result of the fourth determination step S24 performed in the first deceleration section are connected through OR logic to determine whether to perform the second deceleration step S32.

The first deceleration step S31 after the third determination step S23 is the same step as the first deceleration step S31 after the first determination step S21. That is, the first deceleration step S31 may be performed when either the result of the first deceleration step S31 or the result of the second determination step S22 is passed. In the mass production section, the controller 70 may perform the first determination step S21 and the third determination step S23 in parallel and independently. When the first deceleration step S31 is performed, the second determination step S22 may be performed even when the first determination step S21 is not passed (N), and the fourth determination step S24 may be performed even when the third determination step S23 is not passed (N).

The second deceleration step S32 after the fourth determination step S24 is the same step as the second deceleration step S32 after the second determination step S22. That is, the second deceleration step S32 may be performed when either the result of the second deceleration step S32 or the result of the fourth determination step S24 is passed. In the first deceleration section, the controller 70 may perform the first determination step S21 and the third determination step S23 in parallel and independently. When the second deceleration step S32 is performed, a color measurement step S13 and an end detection step may be performed even when the second determination step S22 is not passed (N), and the color measurement step S13 and the end detection step may be performed even when the fourth determination step S24 is not passed (N).

When the first deceleration step S31 is performed, the first deceleration section is entered, so the third determination step S23 and the fourth determination step S24 supposed to be performed in the first deceleration section are performed, and when the second deceleration step S32 is performed, the second deceleration section is entered, so the color measurement step S13 and the end detection step supposed to be performed in the first deceleration section are performed.

FIG. 8 and FIG. 6 will be referenced together. The method of supplying the roll-type material according to the embodiment may further include: the color measurement step S13 in which a color sensor 63 measures in real time a color of the material 4 wound on the roll 2; the end detection step in which the controller 70 receives a color value of the material 4 from the color sensor 63 and determines that an end of the material 4 is detected when the color value is changed; and a stop step S33 in which the controller 70 stops unwinding of the roll 2 when detecting the end of the material 4.

The color measurement step S13 is a step in which the color sensor 63 measures in real time the color value of the material 4 and provides it to the controller 70. The color measurement step S13 may be performed in real time, and may be continuously performed in the second deceleration section. The color sensor 63 may observe a predetermined specific point Pc of the material 4, measure a color value of the specific point Pc, and provide it to the controller 70.

The end detection step is a step in which the controller 70 recognizes the end of the material 4 on the basis of a change in the color value of the material 4 received from the color sensor 63. The end refers to a point where material 4 is no longer supplied from the roll 2. When the material 4 is an electrode, the end may be an end (6E in FIG. 6) of an active material 6 coated on a current collector 5. In this case, the color sensor 63 provides a color value of the active material 6 to the controller 70, and then finally provides a color value of the current collector 5 to the controller 70. The controller 70 may recognize that the color value is changed and determine that the end of the material 4 is detected. Alternatively, the controller 70 may remember a range of the color value of the current collector 5 and determine that the end of the material 4 is detected when the color value provided from the color sensor 63 is included in the color value of the remembered range.

The stop step S33 is a step in which the controller stops the unwinding of the roll 2 when detecting the end of the material. In the stop step S33, the controller 70 may stop equipment that rotates the roll 2 and transfers the material 4. The controller 70 may stop an unwinder 10, a rewinder 20, a rolling roller 50, and the like. When the controller 70 stops the equipment, the material 4 is already moving at the second deceleration speed, so the equipment may not be damaged even when it is stopped immediately. The second deceleration speed may be determined to be a speed low enough to prevent damage to the equipment even when it is stopped immediately.

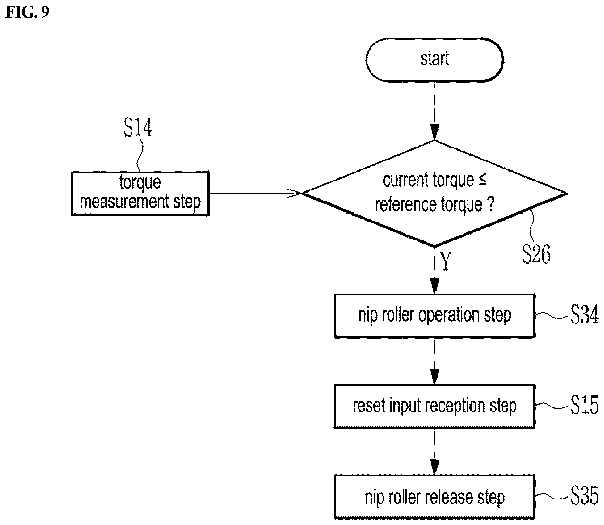

FIG. 9 is a flowchart illustrating the operation of a nip roller 40 according to an embodiment. FIG. 7 and FIG. 9 will be referenced together.

The method of supplying the roll-type material according to the embodiment may further include: a torque measurement step S14 in which a torque sensor 64 connected to a guide roller 30 measures a torque that is applied to the guide roller 30 while the material 4 is moved in contact with the guide roller 30; a breakage determination step S26 in which the controller 70 receives the torque of the guide roller 30 from the torque sensor 64 and determines whether the torque of the guide roller 30 is equal to or less than a reference torque; and a nip roller operation step S34 in which the material 4 is determined to be broken when the torque of the guide roller 30 is equal to or less than the reference torque and the nip roller 40 is controlled in movement so that the nip roller 40 fixedly pressurizes the material 4 to the guide roller 30.

The torque measurement step S14 is a step in which the torque sensor 64 measures the torque applied to the guide roller 30 and provides it to the controller 70. The torque measurement step S14 may be continuously performed regardless of the mass production section, the first deceleration section, and the second deceleration section. This is because an accident in which the material 4 is broken may occur regardless of the sections.

The breakage determination step S26 is a step in which the controller 70 compares a current torque of the guide roller 30 received from the torque sensor 64 with the reference torque. When the material 4 is moved while in contact with the guide roller 30 in a normal state, the guide roller 30 may be rotated due to the movement of the material 4, and the torque sensor 64 may measure a torque at which the guide roller 30 is rotated. However, when the material 4 is broken and the guide roller 30 and the material 4 are not in sufficient contact with each other, the material 4 may not transmit a force to the guide roller 30, so the guide roller 30 may not be rotated and the torque sensor 64 may not measure a torque. The controller 70 may determine that the material 4 is broken when the torque measured by the torque sensor 64 is equal to or less than the reference torque.

The nip roller operation step S34 is a step in which the controller 70 operates the nip roller 40 when the torque of the guide roller 30 is equal to or less than the reference torque. In the nip roller operation step S34, the controller 70 may control the nip roller 40 to be moved toward the guide roller 30. The nip roller 40 may be moved toward the guide roller 30 to pressurize and fix the material 4 between the nip roller 40 and the guide roller 30.

The method of supplying the roll-type material according to the embodiment may further include: a reset input reception step S15 in which the controller 70 receives a reset input; and a nip roller release step S35 in which the controller 70 controls the nip roller 40 to be moved away from the guide roller 30 when receiving the reset input.

The reset input reception step S15 is a step in which a user reconnects the broken material 4 with tape or other methods and then inputs the reset input to the controller 70 to operate equipment again. The reset input is a command entered to release the nip roller 40. The user may check a breakage state of the material 4, perform recovery, and then select when to enter the reset input.

The nip roller release step S35 is a step in which the controller 70 controls the nip roller 40 to be moved away from the guide roller 30 when receiving the reset input. When the nip roller release step S35 is performed, the nip roller 40 may be moved away from the guide roller 30, the material 4 may come into contact with the guide roller 30, and the material 4 may be moved away from the nip roller 40. After performing the nip roller release step S35, the controller 70 may operate equipment such as the unwinder 10, the rewinder 20, and the rolling roller 50 again.

Immediately after the material 4 is broken, the controller 70 may recognize the breakage through the torque sensor 64 and immediately operate the nip roller 40 to fix the material 4 to the guide roller 30. Therefore, it is possible to minimize damage to other portions of the broken material 4.

The present disclosure has been described in detail with embodiments thereof. However, the above is merely an example in which the principles of the present disclosure, and other configurations may be included without departing from the scope of the present disclosure.

## Claims

1. An apparatus for supplying a roll-type material, the apparatus comprising:
an unwinder configured to unwind a roll on which a material is wound;
a rotation speed sensor configured to measure a rotation speed of the roll; and
a controller configured to perform a first deceleration for decelerating the rotation speed of the roll when the rotation speed of the roll is equal to or greater than a first reference rotation speed, and perform a second deceleration for decelerating the rotation speed of the roll when the rotation speed of the roll is equal to or greater than a second reference rotation speed after the rotation speed of the roll is decelerated.

2. The apparatus of claim 1, further comprising:
a first distance sensor configured to measure a distance to a bobbin of the roll; and
a second distance sensor configured to measure a distance to the material wound on the roll,
wherein the controller calculates a thickness of the roll by subtracting a measurement value of the second distance sensor from a measurement value of the first distance sensor, performs the first deceleration when the thickness of the roll is equal to or less than a first reference thickness, and performs the second deceleration when the thickness of the roll is equal to or less than a second reference thickness after the first deceleration.

3. The apparatus of claim 2, wherein the controller performs the first deceleration when the rotation speed of the roll is equal to or greater than the first reference rotation speed or the thickness of the roll is equal to or less than the first reference thickness, and performs the second deceleration when the rotation speed of the roll is equal to or greater than the second reference rotation speed or the thickness of the roll is equal to or less than the second reference thickness after the first deceleration.

4. The apparatus according to an one of claims 1 to 3, further comprising:
a color sensor configured to measure a color of the material wound on the roll,
wherein the controller receives a color value of the material from the color sensor, determines that an end of the material is detected when the color value is changed, and stops unwinding of the roll.

5. The apparatus according to an one of claims 1 to 4, further comprising:
a guide roller configured to guide the material to be transferred;
a torque sensor connected to the guide roller and configured to measure a torque that is applied to the guide roller while the material is moved in contact with the guide roller; and
a nip roller disposed spaced apart from the guide roller and configured to fixedly pressurize the material to the guide roller under control of the controller,
wherein the controller receives a torque at which the guide roller is rotated from the torque sensor, determines that the material is broken when the torque is equal to or less than a reference torque, and controls the nip roller to be moved toward the guide roller.

6. The apparatus of claim 5, wherein the controller controls the nip roller to be moved away from the guide roller when receiving a reset input.

7. The apparatus of claim 1, wherein the controller converts the rotation speed of the roll into a remaining length of the material wound on the roll, performs the first deceleration when the remaining length is equal to or less than a first reference length, and performs the second deceleration when the remaining length is equal to or less than a second reference length after the first deceleration.

8. The apparatus of claim 1, wherein a speed immediately after performing the first deceleration is lower than the second reference rotation speed, and a speed immediately after performing the second deceleration is lower than the speed immediately after performing the first deceleration.

9. A method of supplying a roll-type material, the method comprising:
a rotation speed measurement step in which a rotation speed sensor measures in real time a rotation speed of a roll that is rotated while the roll on which a material is wound is unwound;
a first determination step in which a controller determines whether the rotation speed of the roll is equal to or greater than a first reference rotation speed;
a first deceleration step in which the controller controls the rotation speed of the roll to be decelerated when the rotation speed of the roll is equal to or greater than the first reference rotation speed;
a second determination step in which the controller determines whether the rotation speed of the roll is equal to or greater than a second reference rotation speed after the first deceleration step; and
a second deceleration step in which the controller controls the rotation speed of the roll to be decelerated when the rotation speed of the roll is equal to or greater than the second reference rotation speed.

10. The method of claim 9, further comprising:
a thickness measurement step in which a first distance sensor measures in real time a distance to a bobbin of the roll, a second distance sensor measures a distance to the material wound on the roll, and the controller calculates a thickness of the roll by subtracting a measurement value of the second distance sensor from a measurement value of the first distance sensor;
a third determination step in which the controller determines whether the thickness of the roll is equal to or less than a first reference thickness; and
a fourth determination step in which the controller determines whether the thickness of the roll is equal to or less than a second reference thickness after the first deceleration step.

11. The method of claim 10, wherein the first determination step and the third determination step are performed independently in parallel, and
the second determination step and the fourth determination step are performed independently in parallel.

12. The method of claim 11, wherein the first deceleration step is performed when the rotation speed of the roll is determined to be equal to or greater than the first reference rotation speed in the first determination step or when the thickness of the roll is determined to be equal to or less than the first reference thickness in the third determination step, and
the second deceleration step is performed when the rotation speed of the roll is determined to be equal to or greater than the second reference rotation speed in the second determination step or when the thickness of the roll is determined to be equal to or less than the second reference thickness in the fourth determination step.

13. The method according to an one of claims 9 to 12, further comprising:
a color measurement step in which a color sensor measures in real time a color of the material wound on the roll;
an end detection step in which the controller receives a color value of the material from the color sensor and determines that an end of the material is detected when the color value is changed; and
a stop step in which the controller stops unwinding of the roll when detecting the end of the material.

14. The method according to an one of claims 9 to 13, further comprising:
a torque measurement step in which a torque sensor connected to a guide roller measures a torque that is applied to the guide roller while the material is moved in contact with the guide roller;
a breakage determination step in which the controller receives the torque of the guide roller from the torque sensor and determines whether the torque of the guide roller is equal to or less than a reference torque; and
a nip roller operation step in which the material is determined to be broken when the torque of the guide roller is equal to or less than the reference torque and the nip roller is controlled in movement so that the nip roller fixedly pressurizes the material to the guide roller.

15. The method of claim 14, further comprising:
a reset input reception step in which the controller receives a reset input; and
a nip roller release step in which the controller controls the nip roller to be moved away from the guide roller when receiving the reset input.
